# EUROPÄISCHE PATENTSCHRIFT

(11) **EP 2 829 757 B1**
(45) Veröffentlichungstag und Bekanntmachung des Hinweises auf die Patenterteilung: **28.02.2018**
(21) Anmeldenummer: 14176979.4
(22) Anmeldetag: 15.07.2014
(51) Int. Cl.: F16C 41/00

(54) **Beschrifteter Lagerring, Lager mit einem beschrifteten Lagerring und Verfahren zum Beschriften eines Lagerrings**
Marked bearing ring, bearing with a marked bearing ring and method for marking a bearing ring
Bague de palier gravée, palier doté d'une bague de palier gravée et procédé de gravure d'une bague de palier

(30) Priorität: 24.07.2013 DE 102013214460
(43) Veröffentlichungstag der Anmeldung: 28.01.2015
(73) Patentinhaber: Aktiebolaget SKF, 415 50 Göteborg (SE)
(72) Erfinder: von Schleinitz, Thilo, 97422 Schweinfurt (DE)
(74) Vertreter: Kuhstrebe, Jochen

(56) Entgegenhaltungen:
- DE-A1- 4 142 313
- JP-A- 2001 063 730
- US-A1- 2012 312 783

## Beschreibung

Die Erfindung betrifft einen beschrifteten Lagerring und ein Lager mit einem beschrifteten Lagerring. Weiterhin betrifft die Erfindung ein Verfahren zum Beschriften eines Lagerrings.

Lagerringe werden in einer großen Vielzahl verschiedener Ausführungsformen und von einer Reihe verschiedener Hersteller hergestellt. Ähnliches gilt für Lager, in denen die Lagerringe verbaut werden. Um die Lagerringe bzw. die Lager zuverlässig unterscheiden zu können und um eine Hersteller- und Typzuordnung zu gewährleisten, werden Lagerringe in vielen Fällen mit einer Beschriftung versehen. Besonders bewährt hat sich dabei die Laserbeschriftung, bei der ein energiereicher Laserstrahl gemäß einer einzuschreibenden Beschriftung lateral über eine Oberfläche des Lagerrings geführt wird. Durch die Energie des Laserstrahls wird das Material des Lagerrings lokal, d. h. insbesondere im Auftreffbereich des Laserstrahls auf den Lagerring, stark erhitzt. Dadurch kommt es zu einer strukturellen und/oder chemischen Umwandlung des erhitzten Materials und einer damit einhergehenden Farbänderung und/oder einem Materialabtrag, so dass sich die erhitzten Bereiche von den nicht erhitzten Bereichen unterscheiden und die Beschriftung dadurch sichtbar ist. Außerdem kann es zu einem Verdampfen und damit einem Abtrag von Material kommen, so dass die Beschriftung zudem als gegenüber der Oberfläche des Lagerrings vertieft ausgebildet ist. Ein Verfahren zum Laser-Beschriften einer Lagerkomponente ist beispielsweise aus der US 2012/0312783 A1 bekannt.

Die bekannte Vorgehensweise hat sich beispielsweise bei Wälzlagerringen aus Stahl gut bewährt und ergibt eine dauerhafte Beschriftung, die sehr flexibel und mit vergleichsweise geringem Aufwand erstellt werden kann.
Insbesondere bei Anwendungen, bei denen Lager starken Korrosionseinflüssen ausgesetzt sind, können die Lagerringe mit einer galvanisch abgeschiedenen Beschichtung aus Zink, einer Zink-Eisen-Legierung oder einer Zink-Nickel-Legierung versehen werden. Derartige Beschichtungen schützen die Lagerringe vor Korrosion. Aus der DE 41 42 313 A1 ist ein Wälzlager mit einer Korrosionsschutzbeschichtung aus einer galvanischen Zink-Legierung bekannt. Auch bei beschichteten Lagerringen ist in vielen Fällen eine Beschriftung erwünscht. Prinzipiell kann auch bei beschichteten Lagerringen eine Laserbeschriftung durchgeführt werden. Es hat sich aber gezeigt, dass bei derart beschrifteten Lagerringen mit der Zeit im Bereich der Beschriftung Korrosionsschäden auftreten und somit die Laserbeschriftung im Falle von beschichteten Lagerringen nicht geeignet scheint. Außerdem führen Unterbrechungen in der aufliegenden Beschichtung zu einer erhöhten Gefahr von Abplatzungen oder Abblätterungen (Delamination).
Aufgabe der Erfindung ist es, Lagerringe, die eine Beschichtung aufweisen, welche Zink, Zink und Eisen oder Zink und Nickel enthält, mit einer Beschriftung zu versehen ohne den durch die Beschichtung gewährleisteten Korrosionsschutz in einem unzulässigen Ausmaß herabzusetzen.
Diese Aufgabe wird durch die Merkmalskombinationen der nebengeordneten Ansprüche gelöst.
Der erfindungsgemäße Lagerring weist einen Ringkörper und eine auf den Ringkörper wenigstens bereichsweise aufgebrachte Beschichtung aus einem Material auf, das sich vom Material des Ringkörpers unterscheidet und Zink oder Zink und Eisen oder Zink und Nickel enthält. In der Beschichtung ist eine mittels eines Laserstrahls erzeugte Beschriftung derart ausgebildet, dass die Beschichtung am Ort der Beschriftung durchgehend eine Restdicke von wenigstens 2 µm aufweist, wobei der Ringkörper am Ort der Beschriftung lückenlos durch die Beschichtung abgedeckt ist.

Die Erfindung hat den Vorteil, dass der Korrosionsschutz der beschrifteten Lagerbauteile nicht oder lediglich in einem vertretbaren Maß herabgesetzt ist. Es hat sich nämlich gezeigt, dass Korrosionsschäden bei beschichteten Lagerringen darauf zurückzuführen sind, dass die üblicherweise beim Beschriften von Lagerringen eingesetzten Laserquellen so energiereiche Laserstrahlen erzeugen, dass die in der Regel sehr dünn ausgebildeten Beschichtungen durch die Laserstrahlen am Ort der Beschriftung vollständig verdampft werden und dadurch das darunter befindliche Material der Ringkörper freigelegt wird.
Dadurch sinkt der Korrosionsschutz am Ort der Beschriftung und es kann zu Korrosionsschäden kommen. Dies wird im Rahmen der Erfindung dadurch verhindert, dass am Ort der Beschriftung eine Restdicke der Beschichtung von wenigstens 2 µm auf dem Ringkörper verbleibt. Insbesondere kann die Beschichtung Zink oder eine Zink-Eisen-Legierung oder eine Zink-Nickel-Legierung enthalten.
Die Dicke der Beschichtung kann in unbeschrifteten Bereichen zwischen 4 µm und 12 µm, insbesondere zwischen 6 µm bis 9 µm betragen.

Die Restdicke der Beschichtung am Ort der Beschriftung beträgt wenigstens 2 µm Dadurch ist bereits ein in vielen Fällen ausreichender Korrosionsschutz gewährleistet. Insbesondere kann die Restdicke der Beschichtung wenigstens 4 µm betragen.
Am Ort der Beschriftung kann wenigstens eine Vertiefung ausgebildet sein. Die Vertiefung kann wenigstens bereichsweise eine Tiefe von wenigstens 1 µm aufweisen. Eine derart ausgebildete Beschriftung bleibt in der Regel dauerhaft erhalten.
Am Ort der Beschriftung kann wenigstens eine Umwandlungszone ausgebildet sein, in der sich das Material der Beschichtung vom Material der Beschichtung außerhalb der Umwandlungszone optisch unterscheidet. In der Umwandlungszone kann das Material der Beschichtung eine andere Struktur, insbesondere eine andere Oberflächenstruktur, und/oder eine andere Oberflächenrauheit und/oder eine andere chemische Zusammensetzung und oder eine andere Reflektivität und/oder eine andere Farbe als außerhalb der Umwandlungszone aufweisen. Dadurch ist gewährleistet, dass die Beschriftung optisch sichtbar ist. Die Umwandlungszone kann insbesondere eine Dicke von wenigstens 0,5 µm aufweisen.

Die Beschriftung kann eine Vielzahl von Pixeln aufweisen. Die Pixel können voneinander getrennt ausgebildet sein.
Die Erfindung betrifft außerdem ein Lager mit einem erfindungsgemäßen Lagerring.
Weiterhin betrifft die Erfindung ein Verfahren zum Beschriften eines Lagerrings, der einen Ringkörper und eine auf den Ringkörper wenigstens bereichsweise aufgebrachte Beschichtung aus einem Material aufweist, das sich vom Material des Ringkörpers unterscheidet und Zink oder Zink und Eisen oder Zink und Nickel enthält. In der Beschichtung wird mittels eines Laserstrahls eine Beschriftung derart ausgebildet, dass die Beschichtung am Ort der Beschriftung durchgehend eine Restdicke von wenigstens 2 µm aufweist, wobei der Ringkörper am Ort der Beschriftung lückenlos durch die Beschichtung abgedeckt ist.
Die Beschriftung kann mittels eines gepulsten Laserstrahls ausgebildet werden. Insbesondere kann der Laserstrahl derart gepulst werden, dass die Beschriftung eine Vielzahl separater Pixel aufweist.
Im Rahmen des erfindungsgemäßen Verfahrens kann die Farbe der Beschriftung geprüft und abhängig vom Prüfungsergebnis entschieden werden, ob der Lagerring aussortiert wird. Bei der Prüfung der Beschichtung kann so vorgegangen werden, dass der Lagerring aussortiert wird, falls die Beschriftung Stahlanlassfarben zeigt. Diese sind auffällig dunkler als silber-weiße Zinkoxidfarben. Insbesondere sind die Stahlanlassfarben goldfarben bis dunkelbraun. Die beschriebenen Farbabweichungen sind sehr leicht feststellbar, so dass diese Prüfmethode mit geringem Aufwand realisierbar ist. Die Prüfung erfordert somit gegenüber der Beschriftung kaum Zusatzaufwand und ermöglicht gleichzeitig eine lückenlose Qualitätskontrolle. Dabei wird nicht nur eine fehlerhafte Beschriftung, sondern insbesondere eine zu dünne Beschichtung erkannt und aussortiert.
Weiterhin bezieht sich die Erfindung auf ein Verfahren zum Beschriften eines Lagerrings, der einen Ringkörper und eine auf den Ringkörper wenigstens bereichsweise aufgebrachte Beschichtung aus einem Material aufweist, das sich vom Material des Ringkörpers unterscheidet und Zink oder Zink und Eisen oder Zink und Nickel enthält, wobei im Bereich der Beschichtung mittels eines Laserstrahls eine Beschriftung ausgebildet wird und auf Basis der Farbe der Beschriftung ermittelt wird, ob der Lagerring eine Beschichtung aufweist, die am Ort der Beschriftung durchgehend eine Restdicke von wenigstens 2 µm aufweist, so dass der Lagerring ausreichend gegen Korrosion geschützt ist.
Auf diese Weise ist im Rahmen der Beschriftung von Lagerringen mit geringem Aufwand eine breit angelegte Prüfung möglich und es können spätere Korrosionsschäden sehr zuverlässig vermieden werden. Da mit dem erfindungsgemäßen Verfahren letztendlich ermittelt wird, ob die Beschichtung eine Mindestdicke aufweist, kann damit auch auf eine Korrosionsgefahr außerhalb der Beschriftung geschlossen werden. Bei einer Abwandlung der Erfindung wird eigens ein für die Beschriftung nicht benötigter Testschriftzug in einem Bereich aufgebracht, in dem geprüft werden soll, ob die Beschichtung die Mindestdicke aufweist.
Die Erfindung wird im Folgenden anhand des in den Figuren dargestellten Ausführungsbeispiels erläutert.
Es zeigen:
- Figur 1: ein erfindungsgemäß ausgebildetes Lager in Seitenansicht,
- Figur 2: einen vergrößerten Ausschnitt aus Figur 1 im Bereich der Beschriftung,
- Figur 3: eine schematische Schnittdarstellung des Außenrings,
- Figur 4: eine Vorrichtung zur Durchführung des erfindungsgemäßen Verfahrens in einer schematischen Darstellung und
- Figur 5: eine mittels einer Variante des erfindungsgemäßen Verfahrens ausgebildete Beschriftung in einer schematischen Darstellung.

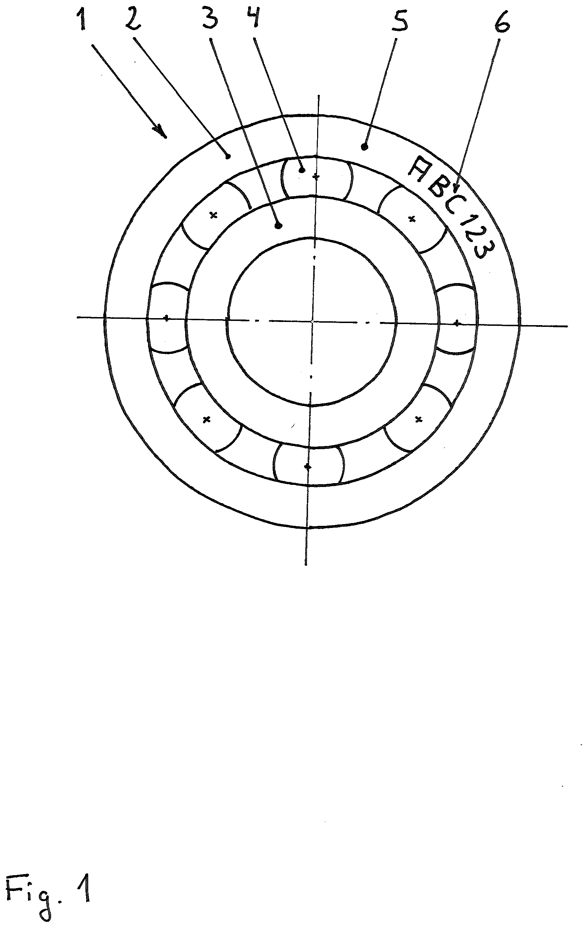

Figur 1 zeigt ein erfindungsgemäß ausgebildetes Lager 1 in Seitenansicht. Das Lager 1 ist als ein Wälzlager ausgebildet und weist einen Außenring 2, einen Innenring 3 und Wälzkörper 4 auf, die zwischen dem Außenring 2 und dem Innenring 3 abrollen. Je nach Ausführung des Lagers 1 können die Wälzkörper 4 in einem nicht figürlich dargestellten Käfig angeordnet sein. Auf einer axialen Endfläche 5 des Außenrings 2 ist eine Beschriftung 6 aufgebracht. Die Beschriftung 6 kann auch auf einer anderen Fläche des Außenrings 2 aufgebracht sein. Ebenso ist es möglich, dass der Außenring 2 mehrere Beschriftungen 6 aufweist. Diese können auf derselben Fläche oder auf unterschiedlichen Flächen des Außenrings 2 aufgebracht sein. Alternativ oder zusätzlich zum Außenring 2 kann der Innenring 3 wenigstens eine Beschriftung 6 auf wenigstens einer Fläche aufweisen.

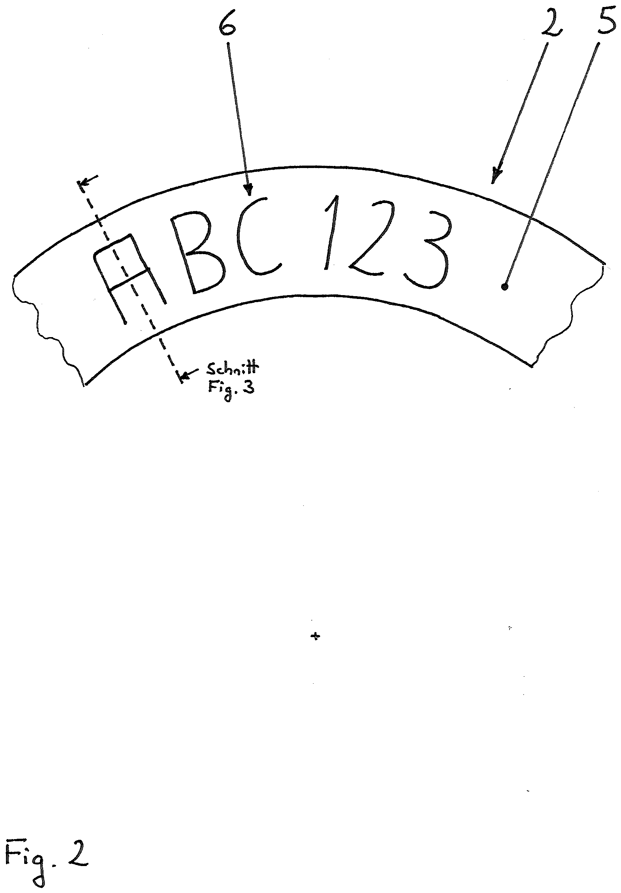

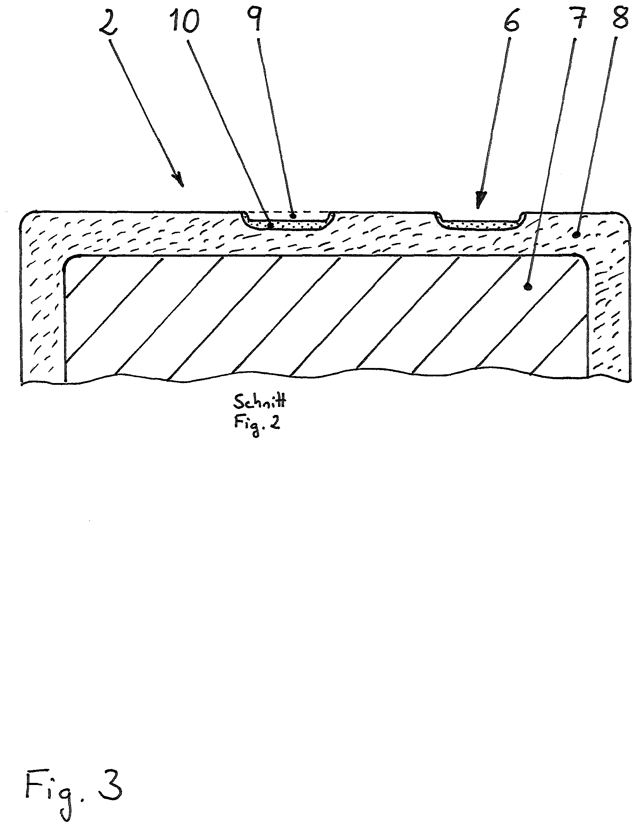

Figur 2 zeigt einen vergrößerten Ausschnitt aus Figur 1 im Bereich der Beschriftung 6. In Figur 2 ist eine Schnittlinie eines in Figur 3 dargestellten Schnitts eingezeichnet.

Figur 3 zeigt eine schematische Schnittdarstellung des Außenrings 2. Der Schnitt verläuft entlang der in Figur 2 dargestellten Schnittlinie durch die Beschriftung 6. Die Darstellung der Figur 3 ist gegenüber der Figur 2 stark vergrößert und zudem stark abstrahiert, um eine möglichst anschauliche Darstellung der Erfindung zu erreichen.

Der Außenring 2 weist einen Ringkörper 7 auf, der aus Stahl, beispielsweise einem Wälzlagerstahl, hergestellt sein kann. Auf den Ringkörper 7 ist eine Beschichtung 8 aufgebracht. Die Beschichtung 8 besteht aus einem anderen Material als der Ringkörper 7, beispielsweise aus Zink. Ebenso kann die Beschichtung 8 auch aus einer Zink-Eisen-Legierung oder aus einer Zink-Nickel-Legierung bestehen.

Die Beschichtung 8 dient dem Korrosionsschutz des Ringkörpers 7 und weist eine Schichtdicke, d. h. einen Abstand zwischen einer dem Ringkörper 7 zugewandten und einer der Umgebung zugewandten Grenzfläche der Beschichtung 8, von beispielsweise 4 µm bis 12 µm, vorzugsweise etwa 6 µm bis 9 µm und insbesondere 7 µm bis 8 µm auf. Falls die Oberfläche des Ringkörpers 7 keine allzu starken Rauheiten oder sonstige Abweichungen von einer ebenen Form aufweist, kann die Schichtdicke auch als Erstreckung der Beschichtung 8 senkrecht zur Oberfläche des Ringkörpers 7 definiert werden. Infolge des galvanischen Abscheidungsprozesses, der bei der Ausbildung der Beschichtung 8 zum Einsatz kommt und bei dem in der Regel keine perfekt auf den Ringkörper 7 abgestimmte Anodengeometrie möglich ist, ist die Schichtdicke nicht genau konstant, sondern variiert abhängig vom Ort.

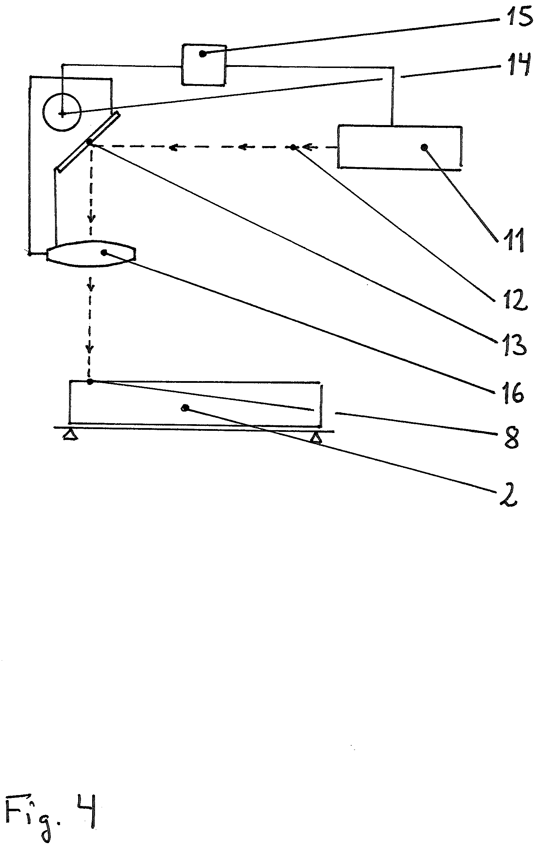

Die Beschriftung 6 ist in der Beschichtung 8 ausgebildet. Wie anhand von Figur 4 noch näher erläutert wird handelt es sich bei der Beschriftung 6 um eine Laserbeschriftung. Am Ort der Beschriftung 6 weist die Beschichtung 8 Vertiefungen 9 auf, an die sich in die Beschichtung 8 hinein Umwandlungszonen 10 anschließen. Die Vertiefungen 9 können bereichsweise eine Tiefe bzgl. der Oberfläche der Beschichtung 8 außerhalb der Beschriftung von wenigstens 1 µm aufweisen. Die Tiefe der Vertiefungen 9 ist dabei als Erstreckung senkrecht zur Oberfläche des Ringkörpers 7 im Bereich der Vertiefungen 9 definiert. Wie aus Figur 3 ersichtlich erstrecken sich die Vertiefungen 9 nicht durch die gesamte Beschichtung 8 hindurch, so dass der darunter liegende Ringkörper 7 im Bereich der Vertiefung 9 nicht frei liegt, sondern trotz der Vertiefungen 9 vom Material der Beschichtung 8 abgedeckt ist. Wenn der Ringkörper 7 frei liegt, ist der Korrosionsschutz beeinträchtigt und es besteht die Gefahr einer lokalen Korrosion. Um dies zuverlässig auszuschließen, sollten sich die Vertiefungen 9 nicht näher als 2 µm an die Oberfläche des Ringkörpers 7 annähern, so dass zwischen dem Boden jeder Vertiefung 9 und dem Ringkörper 7 wenigstens noch 2 µm Beschichtungsmaterial vorhanden sind. Dabei wird sowohl das Beschichtungsmaterial innerhalb der Umwandlungszonen 10 als auch außerhalb der Umwandlungszonen 10 berücksichtigt. Angesichts der Variation der Schichtdicke der Beschichtung 8 und wegen einer gewissen Prozessunsicherheit wählt man in der Regel jedoch einen deutlich höheren Sicherheitsabstand von beispielsweise wenigstens 4 µm.

Abweichend von der Darstellung der Figur 3 können die Umwandlungszonen 10 im Extremfall so ausgebildet sein, das sie sich gerade bis zu der dem Ringkörper 7 zugewandten Grenzfläche der Beschichtung 8 erstrecken und somit bis unmittelbar an die Oberfläche des Ringkörpers 7 heranreichen. Wegen der Variation der Schichtdicke der Beschichtung 8 und wegen einer gewissen Prozessunsicherheit wählt man in der Regel jedoch eine geringere Erstreckung der Umwandlungszonen 10. Dabei weist die Umwandlungszone 10 vorzugsweise eine Dicke von wenigstens 0,5 µm auf.

In den Umwandlungszonen 10 ist das Material der Beschichtung 8 durch die Energieeinwirkung beim Laserbeschriften verändert. Beispielsweise kann das Material der Beschichtung 8 innerhalb der Umwandlungszonen 10 aufgeschmolzen und in einer anderen Struktur als außerhalb der Umwandlungszonen 10 erstarrt sein. Dabei kann auch die Oberflächenstruktur und insbesondere die Oberflächenrauheit innerhalb der Umwandlungszonen 10 von den Umgebungsbereichen abweichen. Ebenso besteht die Möglichkeit, dass das Material der Beschichtung 8 innerhalb der Umwandlungszone 10 durch die Energieeinwirkung beim Laserbeschriften mit dem Luftsauerstoff reagiert hat, so dass es zu einer Oxidbildung, insbesondere zu einer Zinkoxidbildung, gekommen ist. Sowohl das mit anderer Struktur erstarrte Material als auch das oxidierte Material der Beschichtung 8 unterscheidet sich optisch vom Material der Beschichtung 8 außerhalb der Umwandlungszonen 10, so dass sich die Beschriftung 6 optisch von den nicht bestrahlten Bereichen der Beschichtung 8 abhebt und die Beschriftung 6 somit gut lesbar ist. Dabei haben die nicht bestrahlten Bereiche der Beschichtung 8 ein silberfarbenes Aussehen und die Beschriftung 6 hat ein nach weiß verschobenes Aussehen. Die Beschriftung 6 hebt sich durch einen silbrig weißen bis weißen Farbton vom silberfarbigen Untergrund ab.

Figur 4 zeigt eine Vorrichtung zur Durchführung des erfindungsgemäßen Verfahrens in einer schematischen Darstellung.

Die Vorrichtung weist eine Laserquelle 11 zur Erzeugung eines Laserstrahls 12 auf. Bei der Laserquelle 11 kann es sich beispielsweise um einen YAG-Laser handeln. Der Laserstrahl 12 wird mittels eines Spiegels 13 umgelenkt, dessen räumliche Lage mittels eines Antriebs 14 variiert werden kann. Der Antrieb 14 wird ebenso wie die Laserquelle 11 von einem Steuergerät 15 gesteuert. Alternativ zum dargestellten Ausführungsbeispiel mit einem Spiegel 13 können auch mehrere Spiegel 13 im Strahlengang hintereinander angeordnet sein, denen jeweils ein eigener Antrieb 14 zugeordnet ist. Dies ermöglicht eine weniger komplexe Bewegung der einzelnen Spiegel 13, beispielsweise jeweils lediglich eine Schwenkbewegung um eine Achse.

Der vom Spiegel 13 umgelenkte Laserstrahl 12 wird mittels einer Linse 16 auf die Beschichtung 8 des Außenrings 2 fokussiert, so dass dort beispielsweise ein Brennfleck mit einem kreisförmigen Querschnitt ausgebildet wird. Zur Erzeugung der Beschriftung 6 mit einem gewünschten Inhalt wird der Laserstrahl 12 entsprechend dem Inhalt der Beschriftung 6 lateral über die Oberfläche der Beschichtung 8 geführt. Hierzu wird der Spiegel 13 korreliert zum vorgesehen Bewegungsmuster des Laserstrahls 12 bewegt, indem der Antrieb 14 in geeigneter Weise vom Steuergerät 15 angesteuert wird. Die für eine gewünschte Beschriftung 6 benötigten Steuersignale können im Steuergerät 15 gespeichert sein oder vom Steuergerät 15 aus gespeicherten Daten für die Beschriftung 6 berechnet werden.

Neben der Steuerung der lateralen Position des Laserstrahls 12 ist für eine im Sinne der Erfindung ordnungsgemäße Ausbildung der Beschriftung 6 der Energieeintrag des Laserstrahls 12 pro Flächenelement der Beschichtung 6 von großer Bedeutung. Der Laserstrahl 12 erhitzt das Material der Beschichtung 6 lokal sehr stark, so dass dieses schmilzt und zum Teil verdampft. Durch das Verdampfen werden die Vertiefungen 9, durch das Schmelzen die Umwandlungszonen 10 erzeugt. Je mehr Material verdampft wird, desto tiefer werden die Vertiefungen 9 ausgebildet. Je mehr Material geschmolzen wird, desto tiefer werden die Umwandlungszonen 10 ausgebildet. Im Rahmen der Erfindung wird maximal soviel Material verdampft, dass am Ort der Beschriftung 6 noch eine Restdicke an Beschichtungsmaterial verbleibt und somit noch ein Korrosionsschutz gewährleistet ist. Die Restdicke beträgt erfindungsgemäß wenigstens 2 µm. Um eine dauerhafte Ausbildung der Beschriftung 6 auch bei Abrieb oder Abnutzung zu gewährleisten, kann vorgesehen sein, wenigstens soviel Material der Beschichtung 8 zu verdampfen, dass die durch das Verdampfen ausgebildeten Vertiefungen 9 wenigstens bereichsweise eine Tiefe von wenigstens 1 µm aufweisen. Die Vertiefungen 9 verbessern zudem die Lesbarkeit der Beschriftung 6, insbesondere bei einer im Betrieb auftretenden Zinkkorrosion, die eine Annäherung des Farbeindrucks der unbestrahlten Beschichtung 6 an den Farbeindruck der Beschriftung 6 verursachen kann.
Der Energieeintrag pro Flächenelement hängt von der Leistungsdichte, der Pulsdauer und der Wiederholungsrate des Laserstrahls 12 ab. Ein weiterer Einflussfaktor ist die Scangeschwindigkeit, mit der der Laserstrahl 12 über die Oberfläche der Beschichtung 6 gescannt wird. Die Leistungsdichte, die Pulsdauer und die Wiederholungsrate sind entweder durch die Bauart der Laserquelle 11 vorgegeben oder können durch Ansteuerung der Laserquelle 11 mittels des Steuergeräts 15 beeinflusst werden. Die Scangeschwindigkeit kann durch Ansteuerung des Antriebs 14 des Spiegels 13 mittels des Steuergeräts 15 beeinflusst werden.
Verglichen mit der bekannten Vorgehensweise beim Laserbeschriften von unbeschichteten Wälzlagerringen aus Stahl wird im Rahmen des erfindungsgemäßen Verfahrens mit einem deutlich geringeren Energieeintrag pro Flächenelement gearbeitet. Würde man im Rahmen des erfindungsgemäßen Verfahrens mit den üblicherweise beim Laserbeschriften von unbeschichteten Wälzlagerringen aus Stahl verwendeten Parameterbereichen arbeiten, so hätte dies einen Materialabtrag bis zum Ringkörper 7 zur Folge, d. h. das Material des Ringkörpers 7 würde im Auftreffbereich des Laserstrahls 12 freigelegt. Außerdem käme es zu einem Aufheizen oberflächennaher Bereiche des Ringkörpers 7 und dadurch zu einem lokalen Neuhärten und/oder zu einem lokalen Anlassen dieser Bereiche des Ringkörpers 7. Zudem würde das Material des Ringkörpers 7 durch das Aufheizen in ähnlicher Weise verfärbt, wie beim Laserbeschriften von unbeschichteten Wälzlagerringen aus Stahl. Dabei würde eine Gold- bis Braunfärbung entstehen. Beschriftungsbedingte Neuhärtungen oder Anlassgefügeveränderungen sind unerwünscht, werden bei unbeschichteten Lagerringen 2 aber notgedrungen akzeptiert. Bei der erfindungsgemäß ausgebildeten Beschriftung 6 entfällt dieser Nachteil.

Dies bedeutet, dass das im Rahmen der Erfindung unerwünschte Durchschreiben durch die Beschichtung 8 hindurch bis in das Material des Ringkörpers 7 eine golden bis bräunlich gefärbte Beschriftung 6 zur Folge hat im Unterschied zur silbrig weißen bis weißen Färbung im Falle der erfindungsgemäß gewünschten Ausbildung der Beschriftung 6 ausschließlich innerhalb der Beschichtung 8. Dieser Farbunterschied eröffnet die Möglichkeit, mit geringem Aufwand in jedem einzelnen Fall zu prüfen, ob die auf dem Außenring 2 ausgebildete Beschriftung 6 sich lediglich innerhalb der Beschichtung 8 erstreckt oder ob durch die Beschichtung 8 hindurch in den Ringkörper 7 geschrieben wurde und dadurch der Korrosionsschutz lokal aufgehoben wurde. Derartige Fälle, die sich durch eine golden oder braun gefärbte Beschriftung 6 äußern, führen zu einem Aussortieren des Außenrings 2 aus dem Produktionsprozess.

Obwohl ein Durchschreiben durch die Beschichtung 8 im Rahmen des erfindungsgemäßen Verfahrens wegen des vergleichsweise niedrigen Energieeintrags durch den Laserstrahl 12 eigentlich nicht auftreten dürfte, ist die beschriebene Vorgehensweise zum Ermitteln von Ausschussteilen dennoch praxisrelevant. Die im Rahmen der Erfindung gewählten Parameter für das Laserbeschriften führen nämlich nur dann zu einem ordnungsgemäßen Ergebnis, wenn die Dicke der Beschichtung 8 in einem Bereich liegt, für den die Parameter vorgesehen sind. Es kann allerdings beispielsweise durch Prozessfehler beim Galvanisieren dazu kommen, dass die Beschichtung 8 dünner als vorgesehen ausgebildet wird. Die Dicke der Beschichtung 8 kann auch innerhalb einer Charge durch die individuelle Werkstückposition auf dem Galvanisierungsgestell variieren. Eine 100 %-Kontrolle ist jedoch bei Massenteilen nicht vertretbar, zumal die üblichen Prüfmethoden wie Röntgendiffraktometrie oder Röntgenfluoreszenzanalyse vergleichsweise aufwendig sind. Die Beschichtungsfehler können dann aber im Rahmen der Erfindung beim Laserbeschriften aufgedeckt werden, sofern die Beschriftung 6 in dem zu dünn beschichteten Bereich ausgebildet wird. Somit besteht ein Nebeneffekt des erfindungsgemäßen Laserbeschriftens, der ohne Zusatzaufwand verfügbar ist, in einer Qualitätskontrolle des zuvor durchgeführten Beschichtungsverfahrens.

Insgesamt wird im Rahmen der Erfindung durch das Scannen des Laserstrahls 12, der eine auf die Beschichtung 8 und die vorgesehene Scangeschwindigkeit abgestimmte Leistungsdichte, Pulsdauer und Wiederholungsrate aufweist, in einem über die Ansteuerung des Antriebs 14 vorgegebenen Muster die Beschriftung 6 derart in die Beschichtung 8 eingeschrieben dass auch am Ort der Beschriftung 6 noch eine Restdicke der Beschichtung 8 erhalten bleibt und dadurch ein Korrosionsschutz gewährleistet ist. Gleichzeitig wird sichergestellt, dass sich die durch das Laserbeschriften verursachte Materialumwandlung bis in eine Mindesttiefe der Beschichtung 8 erstreckt und somit verhindert wird, das die Beschriftung 6 leicht abgewischt werden kann oder bei beginnender Korrosion unleserlich wird.

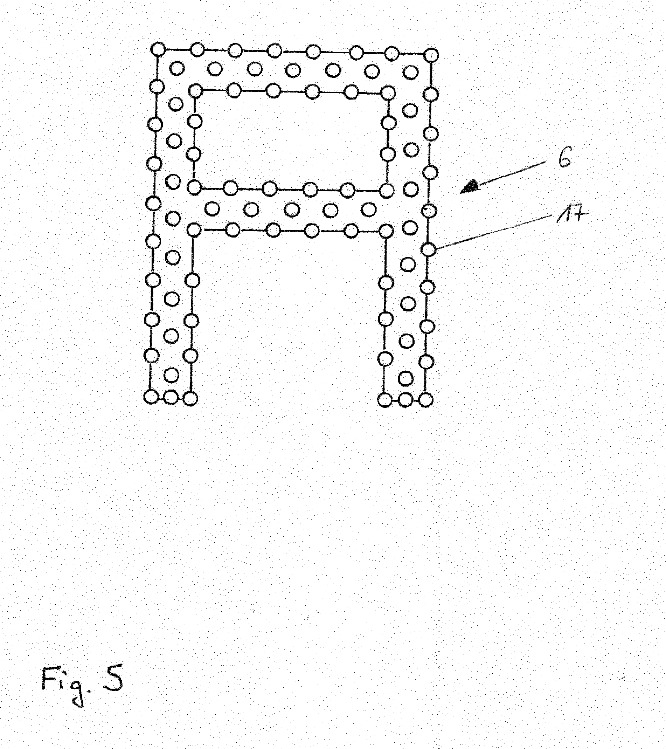

Figur 5 zeigt eine mittels einer Variante des erfindungsgemäßen Verfahrens ausgebildete Beschriftung 6 in einer schematischen Darstellung.

Die dargestellte Beschriftung 6 ist nicht durch eine oder mehrere Linien gebildet, sondern durch eine Vielzahl separater Pixel 17. Dabei entspricht jedes Pixel 17 einem Brennfleck des Laserstrahls 12 auf der Beschichtung 8. Die Striche zwischen den Pixeln 17 sind lediglich aus Gründen der Anschaulichkeit eingezeichnet und sind nicht Bestandteile der mit dem Laserstrahl 12 eingeschriebenen Beschriftung 6.

Das in Figur 5 dargestellte Muster kommt dadurch zustande, dass die Laserquelle 11 gepulst betrieben wird und der Laserstrahl 12 durch zeitlich aufeinander folgende Laserpulse gebildet wird. Jedes Pixel 17 wird durch das Auftreffen eines Laserpulses auf die Beschichtung 8 ausgebildet. Beim nächsten Laserpuls wird mit dem Spiegel eine andere Position auf der Beschichtung 8 angesteuert, so dass der nächste Laserpuls an einer anderen Stell auf die Beschichtung 8 auftrifft und dadurch ein separates Pixel 17 erzeugt. Bei Einsatz eines derart gepulsten Laserstrahls 12 stellt die Beschriftung 6 somit keine durchgängige Oberflächenbeeinträchtigung dar, sondern setzt sich ähnlich einem Zeitungsfoto aus einer Vielzahl von Pixeln 17 zusammen. Dies hat gegenüber einer linienartigen Ausbildung der Beschriftung einen etwas verbesserten Korrosionsschutz zur Folge.

### Bezugszeichenliste

- 1: Lager
- 2: Außenring
- 3: Innenring
- 4: Wälzkörper
- 5: axiale Endfläche
- 6: Beschriftung
- 7: Ringkörper
- 8: Beschichtung
- 9: Vertiefung
- 10: Umwandlungszone
- 11: Laserquelle
- 12: Laserstrahl
- 13: Spiegel
- 14: Antrieb
- 15: Steuergerät
- 16: Linse
- 17: Pixel

## Patentansprüche

1. Lagerring, der einen Ringkörper (7) und eine auf den Ringkörper (7) wenigstens bereichsweise aufgebrachte Beschichtung (8) aus einem Material aufweist, das sich vom Material des Ringkörpers (7) unterscheidet und Zink oder Zink und Eisen oder Zink und Nickel enthält, **dadurch gekennzeichnet, dass** in der Beschichtung (8) eine mittels eines Laserstrahls (12) erzeugte Beschriftung (6) derart ausgebildet ist, dass die Beschichtung (8) am Ort der Beschriftung (6) durchgehend eine Restdicke von wenigstens 2 µm aufweist, wobei der Ringkörper (7) am Ort der Beschriftung (6) lückenlos durch die Beschichtung (8) abgedeckt ist.

2. Lagerring nach Anspruch 1, wobei am Ort der Beschriftung (6) wenigstens eine Vertiefung (9) ausgebildet ist.

3. Lagerring nach Anspruch 2, wobei die Vertiefung (9) wenigstens bereichsweise eine Tiefe von wenigstens 1 µm aufweist.

4. Lagerring nach einem der vorhergehenden Ansprüche, wobei am Ort der Beschriftung (6) wenigstens eine Umwandlungszone (10) ausgebildet ist, in der sich das Material der Beschichtung (8) vom Material der Beschichtung (8) außerhalb der Umwandlungszone (10) optisch unterscheidet.

5. Lagerring nach Anspruch 4, wobei die Umwandlungszone (10) eine Dicke von wenigstens 0,5 µm aufweist.

6. Lagerring nach einem der vorhergehenden Ansprüche, wobei die Beschriftung (6) eine Vielzahl von Pixeln (17) aufweist.

7. Lager, das einen Lagerring (2, 3) nach einem der vorhergehenden Ansprüche aufweist.

8. Verfahren zum Beschriften eines Lagerrings (2, 3), der einen Ringkörper (7) und eine auf den Ringkörper (7) wenigstens bereichsweise aufgebrachte Beschichtung (8) aus einem Material aufweist, das sich vom Material des Ringkörpers (7) unterscheidet und Zink oder Zink und Eisen oder Zink und Nickel enthält, wobei in der Beschichtung (8) mittels eines Laserstrahls (12) eine Beschriftung (6) derart ausgebildet wird, dass die Beschichtung (8) am Ort der Beschriftung (6) durchgehend eine Restdicke von wenigstens 2 µm aufweist, wobei der Ringkörper (7) am Ort der Beschriftung (6) lückenlos durch die Beschichtung (8) abgedeckt ist.

9. Verfahren nach Anspruch 8, wobei die Farbe der Beschriftung (6) geprüft wird und abhängig vom Prüfungsergebnis entschieden wird, ob der Lagerring (2, 3) aussortiert wird.

10. Verfahren zum Beschriften eines Lagerrings (2, 3), der einen Ringkörper (7) und eine auf den Ringkörper (7) wenigstens bereichsweise aufgebrachte Beschichtung (8) aus einem Material aufweist, das sich vom Material des Ringkörpers (7) unterscheidet und Zink oder Zink und Eisen oder Zink und Nickel enthält, wobei
- im Bereich der Beschichtung (8) mittels eines Laserstrahls (12) eine Beschriftung (6) ausgebildet wird und
- auf Basis der Farbe der Beschriftung (6) ermittelt wird, ob der Lagerring (2, 3) eine Beschichtung (8) aufweist, die am Ort der Beschriftung (6) durchgehend eine Restdicke von wenigstens 2 µm aufweist, so dass der Lagerring (2, 3) ausreichend gegen Korrosion geschützt ist.

## Claims

1. Bearing ring having a ring body (7) and a coating (8), applied at least to certain regions of the ring body (7), made of a material that is different from the material of the ring body (7) and contains zinc or zinc and iron or zinc and nickel, **characterized in that** the coating (8) contains a marking (6) which is created using a laser beam (12) and is designed such that the coating (8) at the location of the marking (6) has a continuous residual thickness of at least 2 µm, wherein the ring body (7) is covered without gaps by the coating (8) at the location of marking (6).

2. Bearing ring according to Claim 1, wherein at least one depression (9) is formed at the location of the marking (6).

3. Bearing ring according to Claim 2, wherein the depression (9) has, at least in certain regions, a depth of at least 1 µm.

4. Bearing ring according to one of the preceding claims, wherein at least one conversion zone (10) is formed at the location of the marking (6), in which zone the material of the coating (8) differs optically from the material of the coating (8) beyond the conversion zone (10).

5. Bearing ring according to Claim 4, wherein the conversion zone (10) has a thickness of at least 0.5 µm.

6. Bearing ring according to one of the preceding claims, wherein the marking (6) has a multiplicity of pixels (17).

7. Bearing having a bearing ring (2, 3) according to one of the preceding claims.

8. Method for marking a bearing ring (2, 3) which has a ring body (7) and a coating (8), applied at least to certain regions of the ring body (7), made of a material that is different from the material of the ring body (7) and contains zinc or zinc and iron or zinc and nickel, wherein the coating (8) contains a marking (6) which is created using a laser beam (12) and is designed such that the coating (8) at the location of the marking (6) has a continuous residual thickness of at least 2 µm, wherein the ring body (7) is covered without gaps by the coating (8) at the location of marking (6).

9. Method according to Claim 8, wherein the colour of the marking (6) is examined and the examination result decides whether the bearing ring (2, 3) is rejected.

10. Method for marking a bearing ring (2, 3) which has a ring body (7) and a coating (8), applied at least to certain regions of the ring body (7), made of a material that is different from the material of the ring body (7) and contains zinc or zinc and iron or zinc and nickel, wherein
- in the region of the coating (8) a marking (6) is created using a laser beam (12) and
- on the basis of the colour of the marking (6), it is determined whether the bearing ring (2, 3) has a coating (8) which, at the location of the marking (6), has a continuous residual thickness of at least 2 µm, so that the bearing ring (2, 3) is adequately protected from corrosion.

## Revendications

1. Bague de palier comportant un corps de bague (7) et un revêtement (8), déposé au moins par zones sur le corps de bague (7), constitué d'un matériau qui est différent du matériau du corps de bague (7) et contient du zinc ou du zinc et du fer ou du zinc et du nickel, **caractérisée en ce qu'**un marquage (6) généré au moyen d'un faisceau laser (12) est formé dans le revêtement (8) de manière à ce que le revêtement (8) présente une épaisseur résiduelle continue d'au moins 2 µm à l'emplacement du marquage (6), dans laquelle le corps de bague (7) est entièrement recouvert par le revêtement (8) à l'emplacement du marquage (6).

2. Bague de palier selon la revendication 1,
dans laquelle au moins un renfoncement (9) est formé à l'emplacement du marquage (6).

3. Bague de palier selon la revendication 2,
dans laquelle le renfoncement (9) présente au moins par zones une profondeur d'au moins 1 µm.

4. Bague de palier selon l'une des revendications précédentes,
dans laquelle il est formé à l'emplacement du marquage (6) au moins une zone de transformation (10) dans laquelle le matériau du revêtement (8) est optiquement différent du matériau du revêtement (8) à l'extérieur de la zone de transformation (10).

5. Bague de palier selon la revendication 4,
dans laquelle la zone de transformation (10) présente une épaisseur d'au moins 0,5 µm.

6. Bague de palier selon l'une des revendications précédentes,
dans laquelle le marquage (6) présente une pluralité de pixels (17).

7. Palier comportant une bague de palier (2, 3) selon l'une des revendications précédentes.

8. Procédé de marquage d'une bague de palier (2, 3) comportant un corps de bague (7) et un revêtement (8), déposé au moins par zones sur le corps de bague (7), constitué d'un matériau qui est différent du matériau du corps de bague (7) et contient du zinc ou du zinc et du fer ou du zinc et du nickel, dans lequel un marquage (6) est formé dans le revêtement (8) au moyen d'un faisceau laser (12) de manière à ce que le revêtement (8) présente une épaisseur résiduelle continue d'au moins 2 µm à l'emplacement du marquage (6), dans lequel le corps de bague (7) est entièrement recouvert par le revêtement (8) à l'emplacement du marquage (6).

9. Procédé selon selon la revendication 8,
dans lequel la couleur du marquage (6) est testée et une décision est prise en fonction du résultat du test quant au tri de la bague de palier (2, 3).

10. Procédé de marquage d'une bague de palier (2, 3), comportant un corps de bague (7) et un revêtement (8) déposé au moins par zones sur le corps de bague (7), constitué d'un matériau qui est différent du matériau du corps de bague (7) et contient du zinc ou du zinc et du fer ou du zinc et du nickel, dans lequel
- un marquage (6) est formé dans la région du revêtement (8) au moyen d'un faisceau laser (12), et
- il est déterminé, sur la base de la couleur du revêtement (6), si la bague de palier (2, 3) comporte un revêtement (8) qui présente en continu une épaisseur résiduelle d'au moins 2 µm à l'emplacement du marquage (6), de manière à ce que la bague de palier (2, 3) puisse être correctement protégée contre la corrosion.
